# EUROPEAN PATENT APPLICATION

(11) **EP 4 456 390 A1**
(43) Date of publication of application: **30.10.2024**
(21) Application number: 22910883.2
(22) Date of filing: 06.12.2022
(51) Int. Cl.: H02K 15/02, H02K 1/22

(54) **METHOD AND DEVICE FOR MANUFACTURING ROTOR FOR ROTARY ELECTRIC MACHINE**

(30) Priority: 22.12.2021 JP 2021208351
(71) Applicant: AISIN CORPORATION, Kariya-shi, Aichi 448-8650 (JP)
(72) Inventor: KAWASHIMA, Takaaki, Kariya-shi, Aichi 448-8650 (JP); ADACHI, Takehiko, Kariya-shi, Aichi 448-8650 (JP); HOSHINO, Akinori, Kariya-shi, Aichi 448-8650 (JP); NISHIZAWA, Kosuke, Kariya-shi, Aichi 448-8650 (JP); KONDO, Yoshihiko, Kariya-shi, Aichi 448-8650 (JP); SUGITA, Hiroaki, Kariya-shi, Aichi 448-8650 (JP)
(74) Representative: TBK
(86) International application number: PCT/JP2022/044969
(87) International publication number: WO 2023/120169

(57) **Abstract**

There is disclosed a method for manufacturing a rotor for a rotary electric machine, the method including an arrangement step of supporting a workpiece including a rotor core and a rotor shaft that is hollow and forming a state in which the rotor shaft is disposed on an inner diameter side of the rotor core, a positioning step of positioning, for the rotor shaft, an actuation member that is positionable in a hollow interior of the rotor shaft, has a cavity on a radially inner side, and is radially displaceable or deformable, such that the actuation member radially faces or contacts a molding pressurization region a on an inner peripheral surface of the rotor shaft, and a load application step of applying a force in a radial direction to the actuation member while bringing the drive member into contact with a contacted portion of the actuation member in the cavity of the actuation member by applying a force in an axial direction to the drive member after the arrangement step and the positioning step.

## Description

### TECHNICAL FIELD

The present disclosure relates to a method and a device for manufacturing a rotor for a rotary electric machine.

### BACKGROUND ART

There is known a technique of fitting a rotor shaft into a shaft hole of a rotor core by axially compressing a urethane mandrel inserted into a hollow interior of a hollow rotor shaft with a die and a pad (see, for example, Patent Literature 1).

### CITATIONS LIST

### PATENT LITERATURE

Patent Literature 1: JP 2019-106797 A

### SUMMARY OF INVENTION

### TECHNICAL PROBLEMS

However, in the conventional technique as described above, since a mandrel including urethane is used and a diameter expansion amount of the mandrel is controlled by a compressive force from both ends in an axial direction, it is difficult to appropriately control the diameter expansion amount of the mandrel in a radial direction at each position in the axial direction. Therefore, in the conventional technique as described above, it is difficult to control a fastening allowance between the rotor core and the hollow rotor shaft to be a desired fastening allowance over an entire fitting portion (an entire molding pressurization region).

Thus, in one aspect, the present disclosure provides a properly controllable fastening allowance between a rotor core and a hollow rotor shaft over an entire molding pressurization region.

### SOLUTIONS TO PROBLEMS

In one aspect, there is provided a method for manufacturing a rotor for a rotary electric machine, the method including an arrangement step of supporting a workpiece including a rotor core and a rotor shaft that is hollow and forming a state in which the rotor shaft is disposed on an inner diameter side of the rotor core, a positioning step of positioning, for the rotor shaft, an actuation member that is positionable in a hollow interior of the rotor shaft, has a cavity on a radially inner side, and is radially displaceable or deformable, such that the actuation member radially faces or contacts a molding pressurization region a on an inner peripheral surface of the rotor shaft, and a load application step of applying a force in the radial direction to the actuation member while bringing the drive member into contact with a contacted portion of the actuation member in the cavity of the actuation member by applying a force in the axial direction to the drive member after the arrangement step and the positioning step.

### ADVANTAGEOUS EFFECTS OF INVENTION

In one aspect, in the present disclosure, a fastening allowance between the rotor core and the hollow rotor shaft over the entire molding pressurization region can be appropriately controlled.

### BRIEF DESCRIPTION OF DRAWINGS

FIG. 1 is a sectional view schematically illustrating a sectional structure of a motor according to an embodiment.
FIG. 2 is a sectional view schematically illustrating a manufacturing device for a rotor.
FIG. 3 is an exploded perspective view of a pressure molding mechanism when viewed from below.
FIG. 4 is a sectional perspective view of the pressure molding mechanism taken along a plane passing through a reference axis.
FIG. 5 is a perspective view of the pressure molding mechanism in an assembled state when viewed from below.
FIG. 6 is a schematic flowchart illustrating a flow of the present manufacturing method.
FIG. 7 is a sectional view schematically illustrating each state in some steps illustrated in FIG. 6.
FIG. 8 is a sectional view schematically illustrating each state in some steps illustrated in FIG. 6.
FIG. 9 is a sectional view schematically illustrating each state in some steps illustrated in FIG. 6.
FIG. 10 is a sectional view schematically illustrating each state in some steps illustrated in FIG. 6.
FIG. 11 is a sectional view schematically illustrating each state in some steps illustrated in FIG. 6.
FIG. 12Ais an enlarged view of a part Q1 in FIG. 11.
FIG. 12B is an explanatory diagram illustrating a state of a cam punch in a molding pressurization step in top view.
FIG. 13 is a sectional view schematically illustrating each state in some steps illustrated in FIG. 6.
FIG. 14 is a sectional view schematically illustrating each state in some steps illustrated in FIG. 6.
FIG. 15 is an explanatory diagram of a modification of the cam punch according to the present embodiment.
FIG. 16 is an explanatory diagram of a modification in which the cam punch rotates about the reference axis.
FIG. 17 is an explanatory diagram of another modification of the pressure molding mechanism according to the present embodiment.

### DESCRIPTION OF EMBODIMENTS

Hereinafter, each embodiment will be described in detail with reference to the accompanying drawings. Note that the dimensional ratios in the drawings are merely examples, and the dimensional ratios are not limited to the examples, and shapes and the like in the drawings may be partially exaggerated for convenience of description.

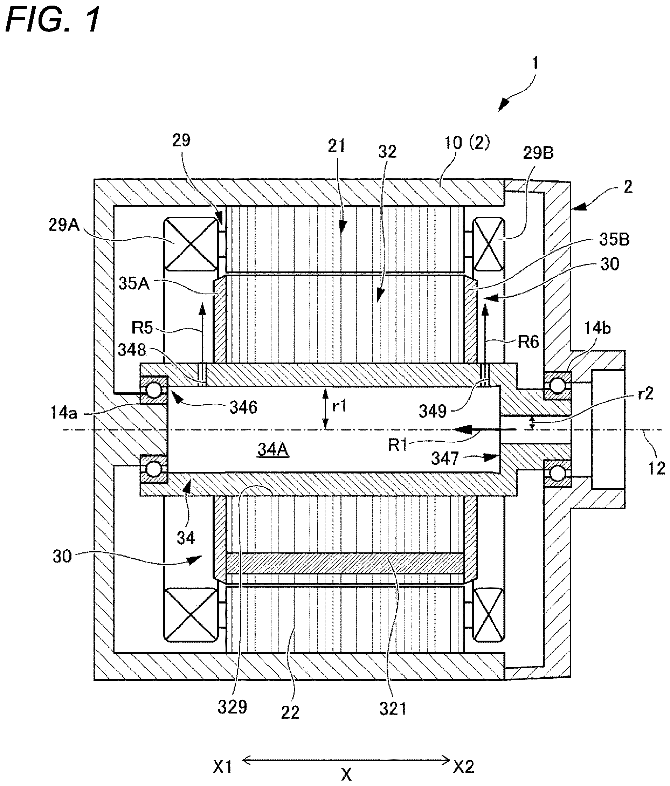

FIG. 1 is a sectional view schematically illustrating a sectional structure of a motor 1 according to an embodiment. In FIG. 1, an X direction, an X direction X1 side, and an X direction X2 side are defined.

FIG. 1 illustrates a rotation axis 12 of the motor 1. In the following description of the motor 1, an axial direction refers to a direction in which the rotation axis (rotation center) 12 of the motor 1 extends, and is parallel to the X direction. A radial direction refers to a radial direction around the rotation axis 12. Therefore, a radially outer side refers to a side away from the rotation axis 12, and a radially inner side refers to a side toward the rotation axis 12. A circumferential direction corresponds to a rotation direction about the rotation axis 12.

The motor 1 may be, for example, a motor for driving a vehicle used in a hybrid vehicle or an electric vehicle. However, the motor 1 may be used for any other application.

The motor 1 is an inner rotor type, and is provided such that a stator 21 surrounds the radially outer side of the rotor 30. In the stator 21, the radially outer side of a stator core 22 is fixed to a stator support 10.

A case 2 forms a space for accommodating the motor 1. The case 2 includes the stator support 10. The stator support 10 is coupled to a radially outer surface of the stator core 22. The stator support 10 may have a flow path through which cooling water passes and/or may have an oil path. The stator support 10 may be constituted by two or more pieces of members.

The stator 21 includes the stator core 22 and a stator coil 29.

The stator core 22 is constituted by, for example, an annular magnetic stacked steel plate, but in a modification, the stator core 22 may be constituted by a green compact in which a magnetic powder is compressed and solidified. Note that the stator core 22 may be constituted by split cores split in the circumferential direction, or may be in a form not split in the circumferential direction.

A plurality of teeth protruding radially inward are formed on the stator core 22, and the stator coil 29 is wound around the stator core 22.

The stator coil 29 includes, for example, a U-phase coil, a V-phase coil, and a W-phase coil. The stator coil 29 includes slot insertion portions (not illustrated) inserted into the slots of the stator core 22 and coil ends 29A and 29B protruding from both sides in the axial direction of the stator core 22.

The stator coil 29 may be wound around the stator core 22 by assembling a coil piece (not illustrated) in a form of a segment coil to the stator core 22. Note that the segment coil is a form in which the coil of each phase is divided in units easy to assemble (for example, units inserted into two slots). The coil piece is constituted by, for example, covering a linear conductor (rectangular wire) having a substantially rectangular cross section with an insulating film (not illustrated). The linear conductor includes copper, but in a modification, the linear conductor may include another conductor material such as iron.

The rotor 30 is disposed on a radially inner side of the stator 21. The rotor 30 includes a rotor core 32 and a rotor shaft 34. The rotor core 32 is fixed to the radially outer side of the rotor shaft 34 and rotates integrally with the rotor shaft 34. The rotor shaft 34 is rotatably supported by the case 2 with bearings 14a and 14b interposed therebetween. Specifically, an inner peripheral surface of the rotor shaft 34 is supported by the bearing 14 a on the X1 side, and an outer peripheral surface is supported by the bearing 14b on the X2 side. The rotor shaft 34 defines the rotation axis 12 of the motor 1.

The form of the inner peripheral surface of the rotor shaft 34 may be rotationally symmetric with respect to the rotation axis 12 or is not required to be rotationally symmetric with respect to the rotation axis 12 in top view. For example, the inner peripheral surface of the rotor shaft 34 may have a circular shape, an elliptical shape, or a polygonal shape in top view. Spline teeth, grooves, and the like may be formed on the inner peripheral surface and the outer peripheral surface of the rotor shaft 34.

The rotor core 32 is constituted by, for example, an annular magnetic stacked steel plate. A permanent magnet 321 is inserted into the rotor core 32. The number, arrangement, and the like of the permanent magnets 321 are arbitrary. In a modification, the rotor core 32 may be constituted by a green compact in which a magnetic powder is compressed and solidified.

End plates 35A and 35B may be attached to both sides in the axial direction of the rotor core 32. The end plates 35A and 35B may have a function of adjusting an imbalance of the rotor 30 (a function of eliminating the imbalance by cutting or the like) in addition to a support function of supporting the rotor core 32.

As illustrated in FIG. 1, the rotor shaft 34 has a hollow portion 34A. The hollow portion 34A extends over the entire length in the axial direction of the rotor shaft 34. The hollow portion 34A may function as an oil passage. For example, as indicated by an arrow R1 in FIG. 1, oil is supplied to the hollow portion 34A from one end in the axial direction, and the oil flows along a radially inner surface of the rotor shaft 34. Therefore, the rotor core 32 can be cooled from the radially inner side. The oil flowing along the radially inner surface of the rotor shaft 34 may be ejected radially outward through oil holes 348 and 349 formed at both ends of the rotor shaft 34 (arrow R5 and R6) to be used for cooling the coil ends 29A and 29B.

The rotor shaft 34 may have a form in which one side of a coupling portion is reduced in diameter when an axial range coupled to the rotor core 32 is defined as the coupling portion. Specifically, as illustrated in FIG. 1, the rotor shaft 34 has a form in which an end on the X2 side is reduced in diameter while an end on the X1 side is not reduced in diameter. Therefore, an inner diameter of the hollow portion 34A is reduced at the end on the X2 side. Specifically, the rotor shaft 34 has a first inner diameter r1 from an end surface on the X1 side to the end on the X2 side, and has a second inner diameter r2 at the end on the X2 side. The second inner diameter r2 is significantly smaller than the first inner diameter r1.

In the example illustrated in FIG. 1, the value of the first inner diameter r1 is substantially constant, and a first step portion 346 or the like for receiving a thrust load of the bearing 14a is formed as a step portion at which the value of the first inner diameter r1 changes. The first step portion 346 may have a step (difference in the radial direction) significantly smaller than a step of the second step portion 347 in the radial direction related to the change from the first inner diameter r1 to the second inner diameter r2.

In such a rotor shaft 34, since the first inner diameter r1 is relatively large in the axial range coupled to the rotor core 32, the permanent magnet 321 and the like can be efficiently cooled via oil flowing along the inner peripheral surface of the rotor shaft 34.

Although the motor 1 having a specific structure is illustrated in FIG. 1, the structure of the motor 1 is substantially arbitrary as long as the hollow rotor shaft 34 is fitted in an axis hole 329 (shaft hole) of the rotor core 32, and the detailed configuration of the hollow portion 34A of the rotor shaft 34 is also arbitrary. In FIG. 1, a specific cooling method using oil is disclosed, but a method for cooling the motor 1 using oil is arbitrary. Therefore, for example, an oil introduction pipe inserted into the hollow portion 34A may be provided, or oil may be dropped from the radially outer side toward the coil ends 29A and 29B through an oil passage which may be formed in the stator support 10.

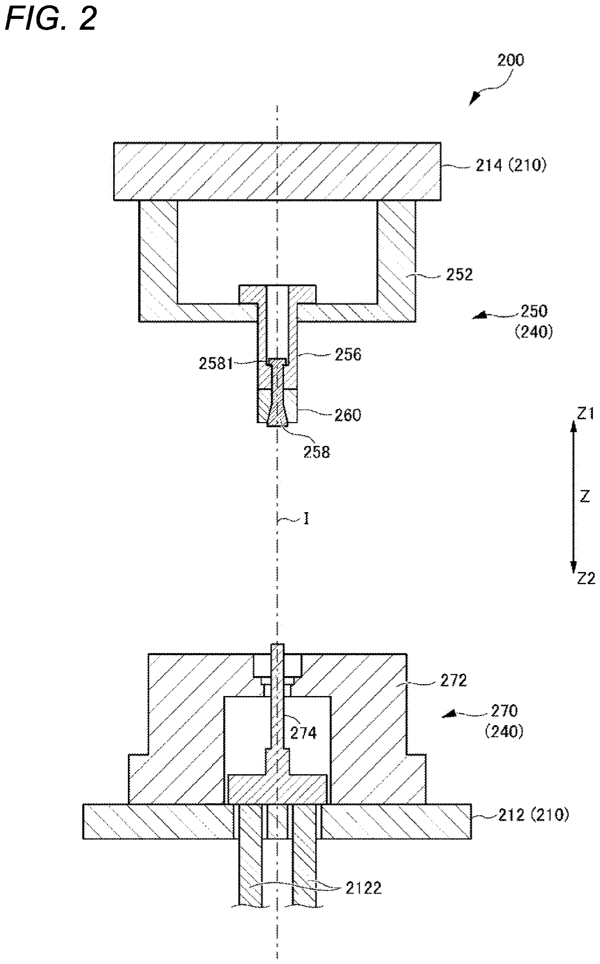

Next, an example of a manufacturing device 200 and a method for manufacturing the rotor 30 in the motor 1 according to the embodiment described above will be described with reference to FIG. 2 and subsequent drawings. In FIG. 2 and the like, a Z direction parallel to the rotation axis 12 and a Z1 side and a Z2 side along the Z direction are defined. Hereinafter, for the sake of explanation, as an example, it is assumed that the Z direction corresponds to an up-down direction and the Z2 side is a lower side in a manufacturing step. In FIG. 2 and the like, a reference axis I in the manufacturing device 200 is illustrated. The reference axis I constitutes a central axis at the time of centering of a workpiece and corresponds to the rotation axis 12 described above. In the following description, terms such as axial direction are based on the reference axis I. Therefore, for example, the radial direction corresponds to a radial direction of a rotating body about the reference axis I.

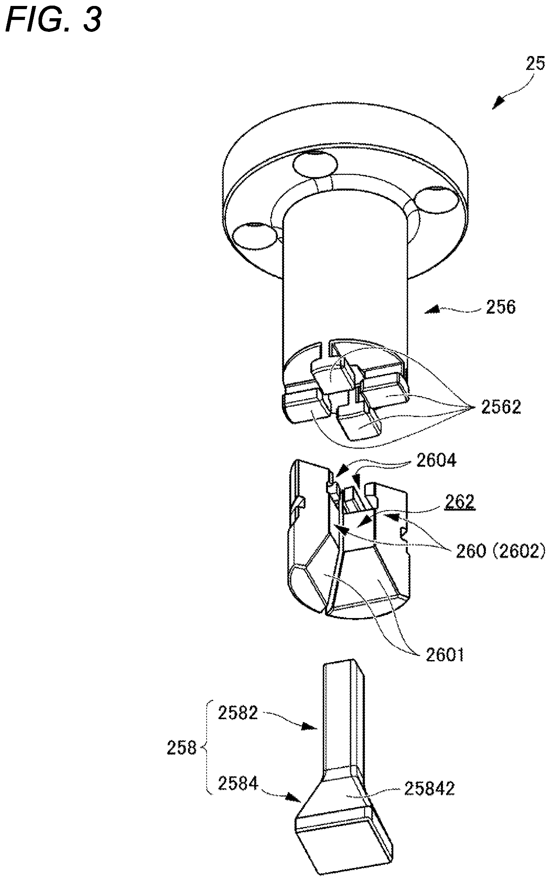

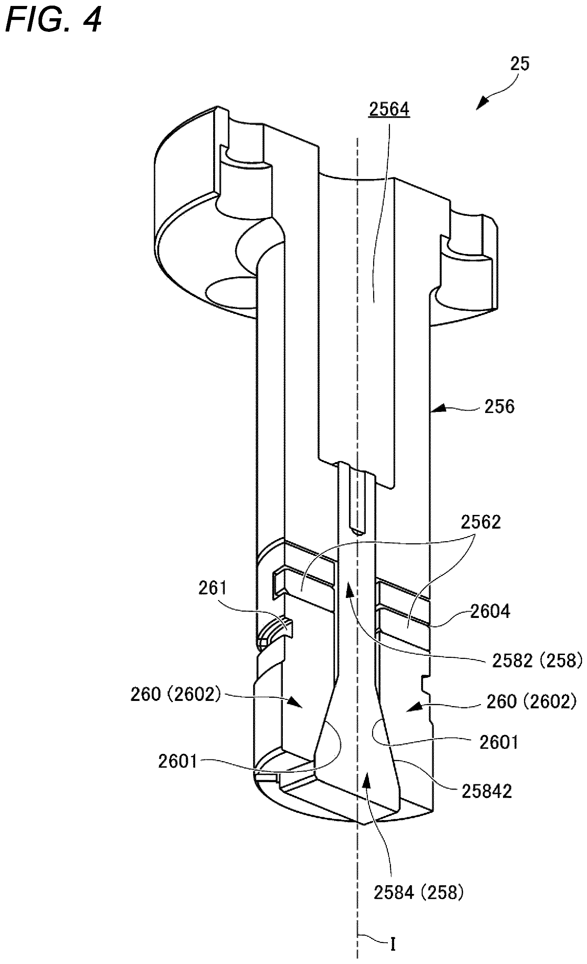

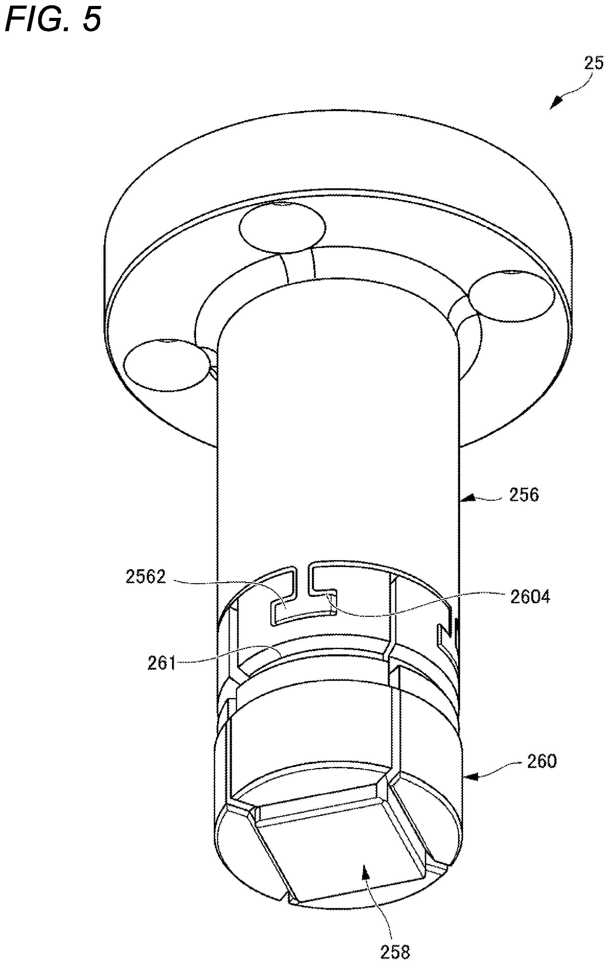

FIG. 2 is a sectional view schematically illustrating the manufacturing device 200 for the rotor 30. FIGS. 3 to 5 are explanatory diagrams of a pressure molding mechanism 25 including a cam punch base 256, a cam driver 258, and a cam punch 260. FIG. 3 is an exploded perspective view of the pressure molding mechanism 25 viewed from below. FIG. 4 is a sectional perspective view of the pressure molding mechanism 25 cut along a plane passing through the reference axis I. FIG. 5 is a perspective view of the pressure molding mechanism 25 viewed from below in an assembled state. In FIG. 3, illustration of a part (two out of four) of the cam punch 260 is omitted.

The manufacturing device 200 includes a press machine 210 and a mold 240.

The press machine 210 may have a normal configuration, and in this case, the manufacturing device 200 can be formed by using an existing press machine. In the press machine 210, a slide 214 above is slidable (slidable) in the up-down direction with respect to a bolster (bed) 212 below. Note that the position of the slide 214 in the up-down direction can be controlled. The bolster 212 is provided with a bed knockout pin 2122 movable in the up-down direction. For example, the bed knockout pin 2122 has a function of lifting a workpiece from a lower mold (a function of separating the workpiece from the lower mold), and may be incorporated in the bolster 212. The bed knockout pin 2122 may be similar to a bed knockout pin provided in a normal press machine. The bed knockout pin 2122 can control a position and/or load in the up-down direction (load in the up-down direction transmitted via the bed knockout pin 2122).

The mold 240 includes an upper mold 250 and a lower mold 270.

The upper mold 250 includes an upper mold fixing portion 252, the cam punch base 256, the cam driver 258, and the cam punch 260.

The upper mold fixing portion 252 is fixed to the slide 214 of the press machine 210. The upper mold fixing portion 252 moves in the up-down direction (ascends and descends) integrally with the slide 214.

The cam punch base 256 is fixed to the upper mold fixing portion 252. Therefore, the cam punch base 256 moves in the up-down direction (ascends and descends) integrally with the upper mold fixing portion 252 and the slide 214. The cam punch base 256 may be formed integrally with a part or a whole of the upper mold fixing portion 252.

As illustrated in FIGS. 3 to 5, the cam punch base 256 extends in the up-down direction in a columnar form, and has a slide support 2562 that supports the cam driver 258 on a lower end surface. As illustrated in FIGS. 3 and 4, the slide support 2562 has a sectional shape of a downward T-shape when viewed in the radial direction, and extends in the radial direction with an equal cross section.

As illustrated in FIG. 4, the cam punch base 256 has a slide hole 2564 formed by a hollow interior with the reference axis I as an axis, and the slide hole 2564 extends in the up-down direction in an equal cross section (for example, an equal cross section having a rectangular shape in top view).

The cam driver 258 functions as a drive member that drives the cam punch 260. The cam punch base 256 is supported by the cam punch base 256 so as to be movable in the up-down direction with respect to the cam punch base.

The cam driver 258 is movable in the up-down direction with respect to the cam punch base 256 between an actuated position above and a deactuated position below. When the cam driver 258 moves between the actuated position and the deactuated position, the cam punch 260 is displaced between the actuated position on the radially outer side and the deactuated position on the radially inner side in conjunction with the movement.

The cam driver 258 is pushed up to the actuated position above by a driver drive pin 274 described later. Note that the cam driver 258 is located at the deactuated position below due to an influence of gravity in a state of being separated in the axial direction from the driver drive pin 274 described later. Note that the displacement of the cam driver 258 with respect to the cam punch base 256 downward from the deactuated position below may be defined by a stopper 2581 (see FIG. 2, not illustrated in FIG. 4 and the like). The actuated position above may be constant or variable as described later.

The cam driver 258 includes a supported portion 2582 and a drive portion 2584.

The supported portion 2582 is inserted into the slide hole 2564 of the cam punch base 256. The supported portion 2582 extends in the up-down direction in an equal cross section (for example, an equal cross section having a rectangular shape in top view) corresponding to the slide hole 2564.

The drive portion 2584 extends in the up-down direction so as to be continuous from a lower end of the supported portion 2582. The drive portion 2584 is disposed on the radially inner side of the cam punch 260. Specifically, the drive unit 2584 is disposed in a cavity 262 (see FIG. 3) on the radially inner side of the cam punch 260.

The drive portion 2584 has a configuration in which a cross-sectional area (cross-sectional area taken along a horizontal plane) increases downward. In the example illustrated in FIGS. 3 to 5, drive portion 2584 has a rectangular sectional shape (for example, a square sectional shape). However, in a modification, the drive portion 2584 may have another sectional shape such as a polygon in accordance with a divided form of the cam punch 260 described later (and the sectional shape of the cavity 262 on the radially inner side related to the divided form).

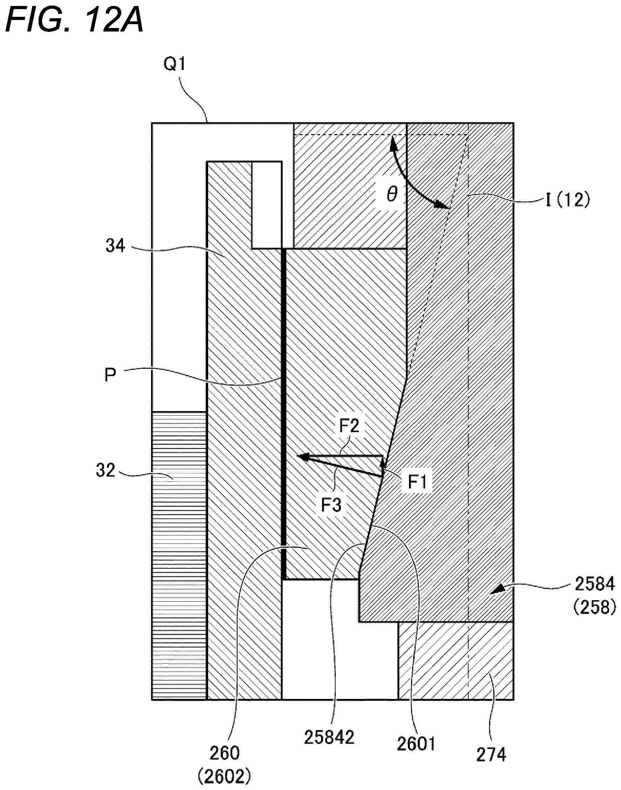

The drive portion 2584 has a second inclined surface 25842 inclined with respect to the up-down direction on an outer peripheral surface (side surface). The second inclined surface 25842 has a planar shape, and forms four side surfaces (outer peripheral surfaces) of drive unit 2584. Inclination angles (for example, an inclination angle with respect to the reference axis I, see a complementary angle of an angle θ in FIG. 12A described later) of the second inclined surfaces 25842 on the four side surfaces of the drive portion 2584 may be the same.

The drive portion 2584 is disposed in the cavity 262 on the radially inner side of the cam punch 260 in such a manner that the second inclined surface 25842 is in surface contact with a first inclined surface 2601 of the cam punch 260 described later. In this case, surface contact between the drive portion 2584 and the cam punch 260 may also be maintained when the cam driver 258 is in any position between the actuated position above and the deactuated position below.

The cam punch 260 is supported by the slide support 2562 of the cam punch base 256. The cam punch 260 is supported by the cam punch base 256 so as to be displaceable in the radial direction with respect to the cam punch base 256.

The cam punch 260 is radially displaceable between the deactuated position on the radially inner side and the actuated position on the radially outer side. The cam punch 260 has a form capable of being positioned in the hollow portion 34A of the rotor shaft 34 when in the deactuated position. The cam punch 260 when in the deactuated position on the radially inner side has an outer shape (for example, a substantially circular or elliptical outer shape as a whole) corresponding to the form of the inner peripheral surface of the rotor shaft 34 in top view. At this time, the cam punch 260 at the deactuated position on the radially inner side may have an outer shape in which the shape of the inner peripheral surface of the rotor shaft 34 is offset radially inward in top view.

In a normal state, the cam punch 260 is located at a deactuated position on the radially inner side. A ring groove 261 of the cam punch 260 may be provided with an elastic ring (not illustrated) that is a ring-shaped elastic member. In this manner, the cam punch 260 may be biased to the deactuated position on the radially inner side by biasing means such as an elastic ring (not illustrated).

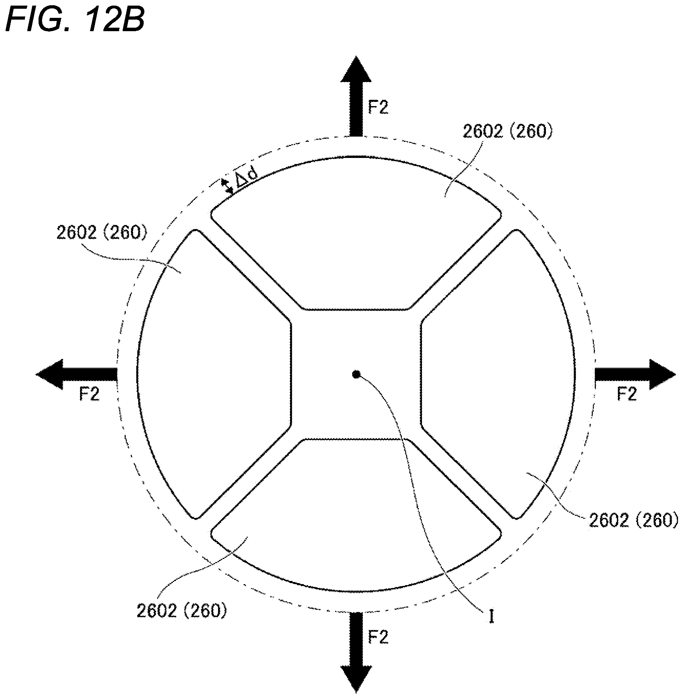

The position of the cam punch 260 in the radial direction changes in conjunction with the axial displacement of the cam driver 258. Specifically, when the cam driver 258 moves from the deactuated position below to the actuated position above, the cam punch 260 moves from the deactuated position on the radially inner side to the actuated position on the radially outer side in conjunction with the movement. When the cam driver 258 moves from the actuated position above to the deactuated position below, the cam punch 260 moves from the actuated position on the radially outer side to the deactuated position on the radially inner side in conjunction with the movement. The cam punch 260 when in the actuated position on the radially outer side has an outer shape (for example, a substantially circular or elliptical outer shape as a whole) corresponding to the form of the inner peripheral surface of the rotor shaft 34 in top view. At this time, the cam punch 260 at the actuated position on the radially outer side may have an outer shape in which the shape of the inner peripheral surface of the rotor shaft 34 is offset radially outward in top view (see an alternate long and short dash line in FIG. 12B described later).

The cam punch 260 has the cavity 262 on the radially inner side. The cavity 262 is continuous from the slide hole 2564 of the cam punch base 256 and extends in the axial direction with the reference axis I as an axis. The cavity 262 has a form corresponding to the drive portion 2584 of the cam driver 258 in top view. Note that the cavity 262 may have a sectional shape rotationally symmetric with respect to the reference axis I (a shape of a cross section taken along the horizontal plane).

The cam punch 260 has the first inclined surface 2601 inclined with respect to the up-down direction on an inner peripheral surface forming the cavity 262. The first inclined surface 2601 forms a non-contact portion with which the second inclined surface 25842 of the drive portion 2584 of the cam driver 258 is in contact. As will be described later with reference to FIG. 12A, the first inclined surface 2601 has a function of converting a part of a force received by the cam punch 260 from the drive portion 2584 into a force in the radial direction.

The cam punch 260 has a function of expanding the diameter of the rotor shaft 34 with plastic deformation by applying a force in the radial direction to the inner peripheral surface of the rotor shaft 34. In order to be able to suitably implement such a function, the cam punch 260 is preferably configured to have a high rigidity and hardness. For example, the cam punch 260 may include a metal material and may be a substantially rigid body (a rigid body that is not substantially deformed in a molding pressurization step described later). When including a metal material, the cam punch 260 can have significantly high durability without wear and the like as compared with urethane.

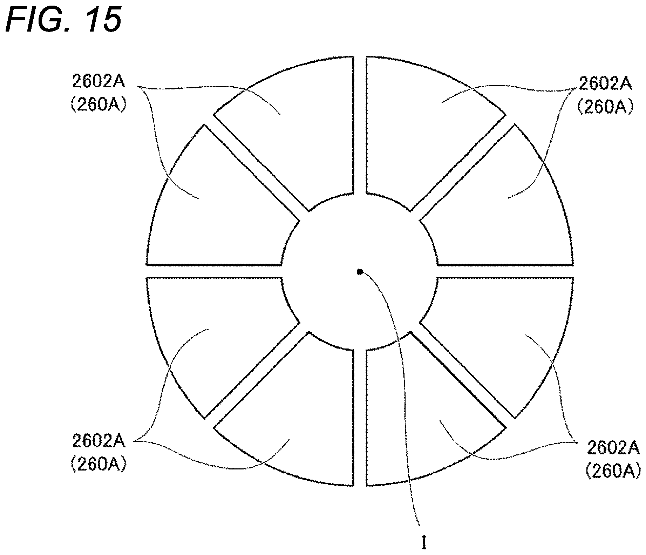

In the example illustrated in FIGS. 3 to 5, as an example, the cam punch 260 is divided into four in the circumferential direction, and each divided body forms a cam slider 2602. In a modification, the cam punch 260 may be divided into five or more divisions (see FIG. 15), or may be divided into three or less divisions.

Each cam slider 2602 is supported by the slide support 2562 so as to be slidable radially outward along the radial direction with respect to the slide support 2562 of the cam punch base 256. In the example illustrated in FIGS. 3 and 4, each cam slider 2602 has an engagement groove 2604 engaged with the slide support portion 2562. The engagement groove 2604 has a downward T-shaped sectional shape corresponding to the sectional shape of the slide support 2562 when viewed in the radial direction, and extends in the radial direction with an equal cross section. In the example illustrated in FIGS. 3 to 5, since each cam slider 2602 is a divided body divided into four divisions, the sliding directions may be orthogonal to each other.

Each cam slider 2602 forms the first inclined surface 2601 described above in a one-to-one correspondence relationship with each of the second inclined surfaces 25842 on the four side surfaces of the drive portion 2584. The first inclined surface 2601 of each cam slider 2602 as a whole forms a boundary surface on the radially outer side of the cavity 262. Inclination angles (for example, an inclination angle with respect to the reference axis I, see a complementary angle of the angle θ in FIG. 12A described later) of the first inclined surface 2601 of each cam slider 2602 may be the same.

The lower mold 270 includes a workpiece support 272 and the driver drive pin 274.

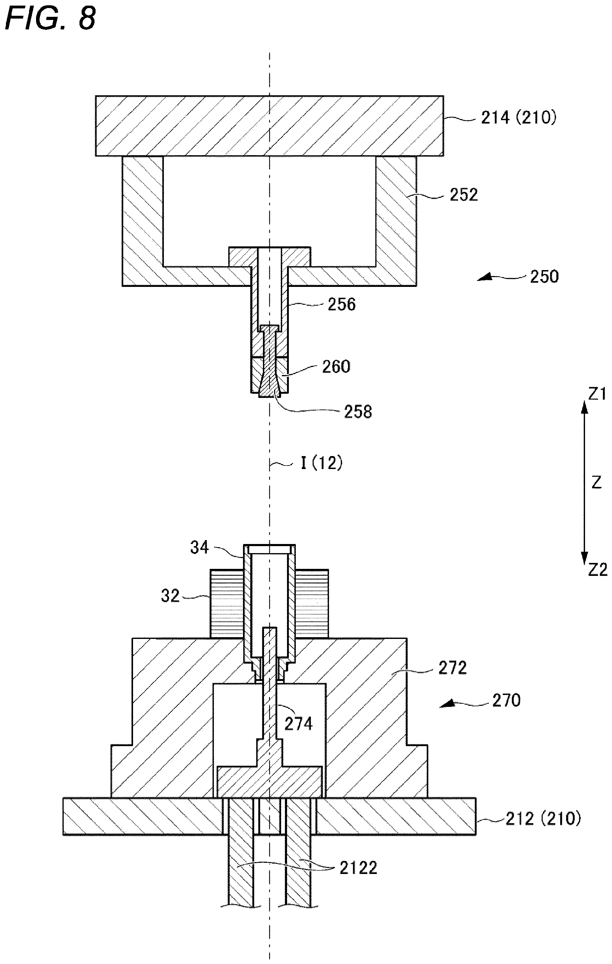

The workpiece support 272 is a lower mold fixing portion fixed to the bolster 212 of the press machine 210. The workpiece support 272 supports a workpiece including the rotor core 32 and the hollow rotor shaft 34 from below. At this time, the workpiece support 272 forms a state in which the rotor shaft 34 is disposed on an inner diameter side of the rotor core 32 (see FIG. 8 described later).

The driver drive pin 274 functions as a component of the pressure molding mechanism 25. The driver drive pin 274 is movable in the up-down direction with respect to the workpiece support 272 so as to be able to abut on a lower end surface of the cam driver 258 (that is, a lower end surface of the drive portion 2584) in the up-down direction. The driver drive pin 274 may be movable in the up-down direction so as to be integrated with the bed knockout pin 2122.

The driver drive pin 274 applies a force in the axial direction to the cam driver 258 on the basis of an axial load from the bed knockout pin 2122 in a state where an upper end surface of the driver drive pin 274 abuts on the lower end surface of the cam driver 258. That is, the driver drive pin 274 transmits the axial load from the bed knockout pin 2122 to the cam driver 258, and thus applies a force in the axial direction (upward force) to the cam driver 258.

In such a manufacturing device 200, the rotor 30 can be appropriately manufactured by the manufacturing method described below using the existing press machine 210. Note that, in a modification, equipment may be used instead of the press machine 210. An operation example of the manufacturing device 200 will be described in relation to the present manufacturing method described below.

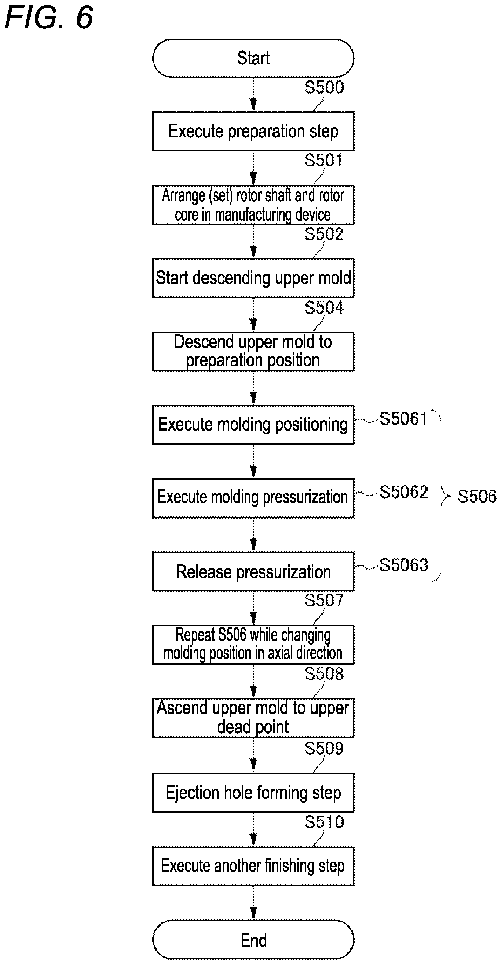

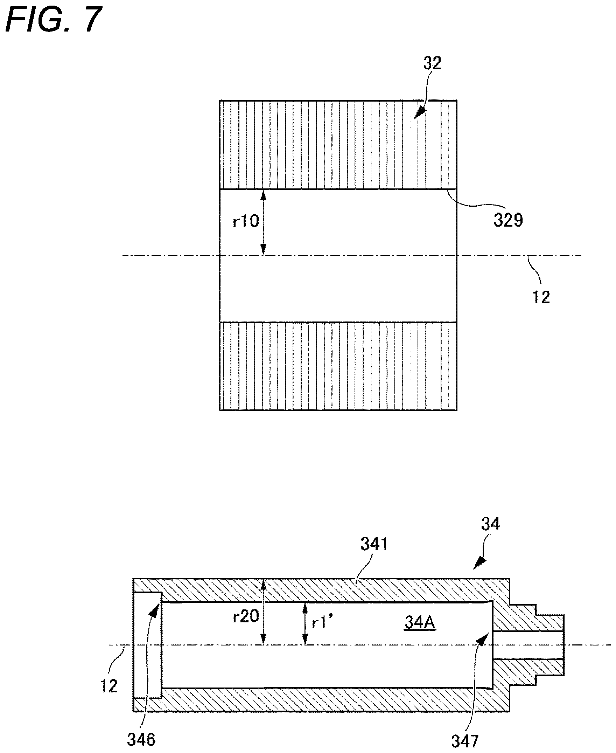

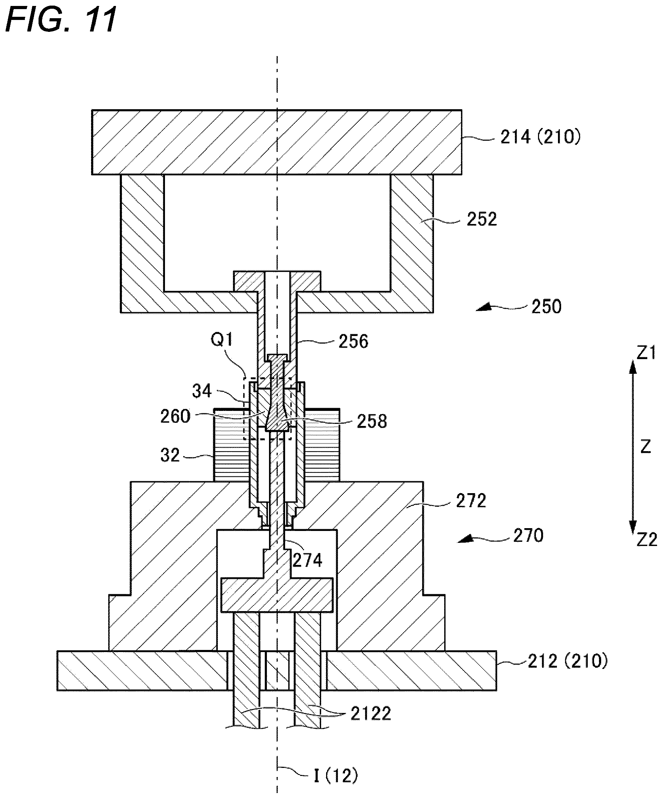

FIG. 6 is a schematic flowchart illustrating a flow of the present manufacturing method. FIGS. 7 to 11, 13, and 14 are sectional views schematically illustrating states of the rotor shaft 34 and the rotor core 32 in the manufacturing device 200 in some steps illustrated in FIG. 6. FIG. 12Ais an enlarged view of a part Q1 in FIG. 11, and is an explanatory diagram of a load transmission mode in the molding pressurization step. FIG. 12B is an explanatory diagram illustrating a state of the cam punch 260 in the molding pressurization step in top view. In FIG. 12B, the cam punch 260 when in the deactuated position on the radially inner side is illustrated, and an alternate long and short dash line representing the outer shape of the cam punch 260 when in the actuated position on the radially outer side is illustrated.

First, as illustrated in FIG. 7, the present manufacturing method includes a preparation step (step S500) of preparing each of the rotor shaft 34 and the rotor core 32 (in a state of not being coupled to each other) as a workpiece.

At this stage, the rotor shaft 34 may have the first step portion 346 and the second step portion 347 described above. The rotor shaft 34 at this stage has an inner diameter r1' at a portion corresponding to an enlarged diameter portion 341 forming the inner peripheral surface of the first inner diameter r1 in a product state, and the inner diameter r1' may be slightly smaller than the first inner diameter r1 in the product state (see FIG. 1). An outer diameter r20 of the rotor shaft 34 at this stage may be the same as or slightly smaller than the inner diameter r10 of the rotor core 32.

Similarly to the rotor shaft 34, the outer diameter of the rotor core 32 at this stage may be slightly smaller than the outer diameter in the product state. This is because the rotor core 32 is slightly deformed radially outward as the diameter of the rotor shaft 34 expands in a fastening step described later.

Next, as illustrated in FIG. 8, the present manufacturing method includes a step (step S501) of setting the rotor shaft 34 and the rotor core 32 in the manufacturing device 200 (an example of an arrangement step). At this time, the workpiece support 272 of the lower mold 270 of the manufacturing device 200 simultaneously supports the rotor shaft 34 and the rotor core 32 from below, and restrains a downward movement (displacement) of the rotor shaft 34 and the rotor core 32. FIG. 8 schematically illustrates a state at an end of step S501.

The rotor shaft 34 and the rotor core 32 are not necessarily simultaneously set on the workpiece support 272 of the manufacturing device 200, and may be sequentially set on the workpiece support 272 of the manufacturing device 200.

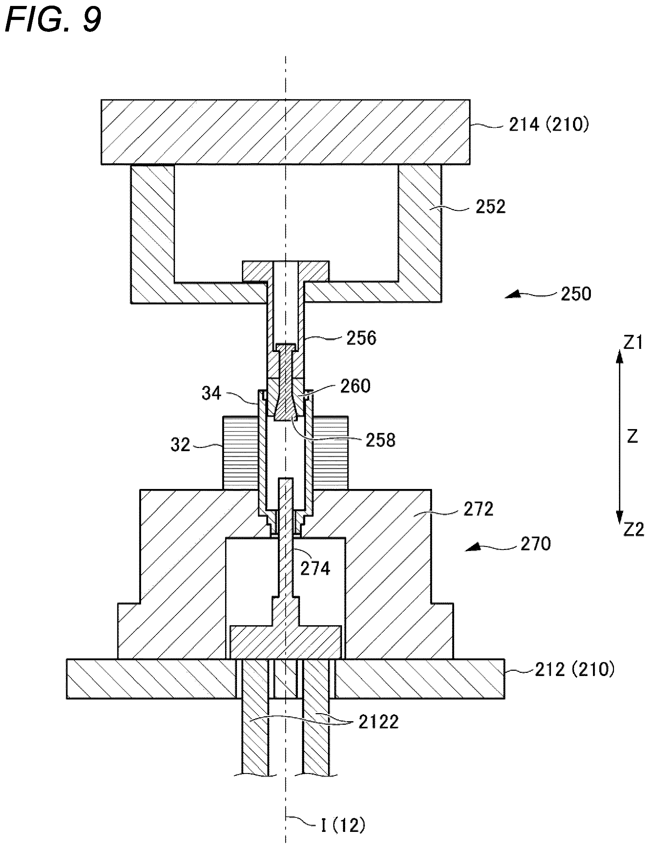

Next, the present manufacturing method includes a step of starting descending the upper mold 250 (step S502) and descending the upper mold 250 to a preparation position (step S504). FIG. 9 schematically illustrates a state at an end of step S504.

Next, the present manufacturing method includes an integration step (step S506) of increasing the diameter of the rotor shaft 34 to integrate the rotor core 32 and the rotor shaft 34.

In the present embodiment, the integration step is executed for each of a plurality of molding target regions in the axial direction on the inner peripheral surface of the rotor shaft 34. In this case, the integration step may be executed in order from the top among the plurality of molding target regions in the axial direction. Hereinafter, a region to be molded and pressurized in the current integration step among the plurality of molding target regions in the axial direction is referred to as a "current molding target region".

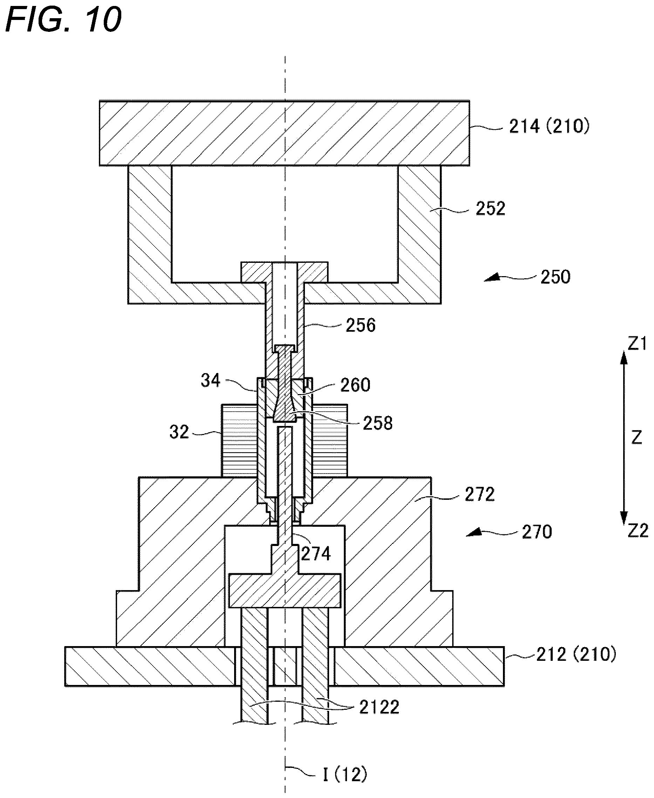

The integration step (step S506) first includes a molding positioning step (step S5061) (an example of a positioning step) of further descending the upper mold 250 and positioning the cam punch 260 for the rotor shaft 34 such that the cam punch 260 radially faces or contacts the current molding target region on the inner peripheral surface of the rotor shaft 34. FIG. 10 schematically illustrates a state at the end of step S5061 when the first molding target region from the top among the plurality of molding target regions in the axial direction is the current molding target region.

In the example illustrated in FIG. 10, the bed knockout pin 2122 is ascended to a position immediately before the driver drive pin 274 abuts on the cam driver 258 in parallel with the molding positioning step (step S5061). However, in a modification, the bed knockout pin 2122 may be ascended in such a manner after the molding positioning step (step S5061) and before step S5062, or before the molding positioning step (step S5061).

The integration step (step S506) then includes a molding pressurization step (step S5062) (an example of a load application step) in which the cam punch 260 is displaced (slid) in the radial direction by transmitting the axial load from the bed knockout pin 2122 to the cam driver 258 via the driver drive pin 274. FIG. 11 schematically illustrates a state during the molding pressurization step (step S5062).

In the molding pressurization step (step S5062), the driver drive pin 274 pushes up the cam driver 258 by the driver drive pin 274 on the basis of the axial load from the bed knockout pin 2122. When the cam driver 258 is pushed up, as illustrated in FIG. 12A, the cam punch 260 is pushed radially outward toward the actuated position on the radially outer side in a state where the second inclined surface 25842 of the cam driver 258 and the first inclined surface 2601 of the cam punch 260 are in contact with each other.

In the process in which the cam punch 260 is displaced to the actuated position on the radially outer side, the cam punch 260 abuts on the current molding target region on the inner peripheral surface of the rotor shaft 34 in the radial direction. When the cam punch 260 is further displaced to the actuated position on the radially outer side, a force F3 perpendicular to a contact surface between the second inclined surface 25842 of the cam driver 258 and the first inclined surface 2601 of the cam punch 260 is generated in accordance with a reaction force (reaction force directed radially inward) from the rotor shaft 34. As illustrated in FIG. 12A, the force F3 is divided into a component F1 in the up-down direction and a radial component F2 directed radially outward, and a magnitude of the components depends on the magnitude of the axial load from the bed knockout pin 2122. The magnitude of the radial component F2 can be expressed by F2 = F3 × sinθ. In this case, as illustrated in FIG. 12A, the angle θ corresponds to the inclination angle of the first inclined surface 2601 (and the second inclined surface 25842) with respect to the horizontal plane.

When the cam punch 260 is further displaced to the actuated position on the radially outer side by further increasing the axial load from the bed knockout pin 2122 (that is, by increasing the radial component F2), the cam punch 260 reaches the actuated position with plastic deformation of the rotor shaft 34. That is, the increased radial component F2 acts radially outward with respect to the current molding target region (see a region P in FIG. 12A) on the inner peripheral surface of the rotor shaft 34, and the rotor shaft 34 expands in diameter with plastic deformation. In this way, when the cam punch 260 reaches the actuated position by pushing up the driver drive pin 274 to the actuated position, the diameter of the rotor shaft 34 is increased with plastic deformation. As a result, the diameter of the rotor shaft 34 is increased in the axial range corresponding to the current molding target region, and the rotor core 32 and the rotor shaft 34 are integrated.

Here, a radial fastening allowance between the rotor core 32 and the rotor shaft 34 provided in the molding pressurization step (step S5062) is determined in accordance with a radial displacement amount (slide amount) Δd of the cam punch 260 after the cam punch abuts on the inner peripheral surface of the rotor shaft 34 until the cam punch 260 reaches the actuated position (see FIG. 12B). The radial displacement amount (slide amount) Δd of the cam punch 260 is determined by a difference between the of the driver drive pin 274 in the up-down position when the cam punch 260 abuts on the inner peripheral surface of the rotor shaft 34 and the position of the driver drive pin 274 in the up-down direction when the cam punch 260 reaches the actuated position. An up-down movement amount related to such a difference can be accurately controlled by controlling the position of the bed knockout pin 2122 in the up-down direction. In this manner, in the present embodiment, the radial fastening allowance between the rotor core 32 and the rotor shaft 34 can be accurately controlled by the position control of the bed knockout pin 2122.

The integration step (step S506) then includes a pressure release step of slightly descending the bed knockout pin 2122 and the driver drive pin 274 to return the cam driver 258 to the deactuated position (step S5063). Accordingly, the cam punch 260 is returned radially inward from the actuated position to the deactuated position. As a return mechanism for radially moving the cam punch 260, a ring-shaped elastic body (not illustrated) may be wound around the ring groove 261 (see FIG. 4) of the cam punch 260. In this case, the elastic ring can simultaneously urge the four cam sliders 2602 radially inward toward the deactuated position.

In the present embodiment, in this manner, a force in the radial direction (see the radial component F2) can be applied to the cam punch 260 by the drive portion 2584 of the cam driver 258 located in the cavity 262 on the radially inner side of the cam punch 260. At this time, the molding target region (see the region P in FIG. 12A) on the inner peripheral surface of the rotor shaft 34 overlaps a contact region between the cam punch 260 and the cam driver 258 (that is, a contact region between the first inclined surface 2601 and the second inclined surface 25842) when viewed in the radial direction. As a result, the force in the radial direction applied to the inner peripheral surface of the rotor shaft 34 via the cam punch 260 can be made uniform over the entire axial range of the molding target region. Thus, in the present embodiment, it is possible to appropriately control the fastening allowance between the rotor core 32 and the rotor shaft 34 over the entire axial range of the molding target region to control a desired fastening allowance.

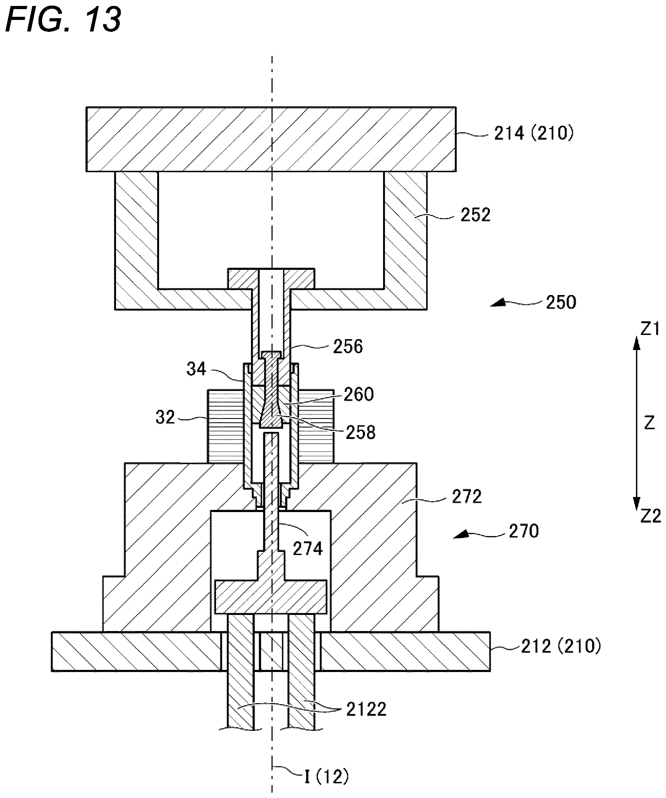

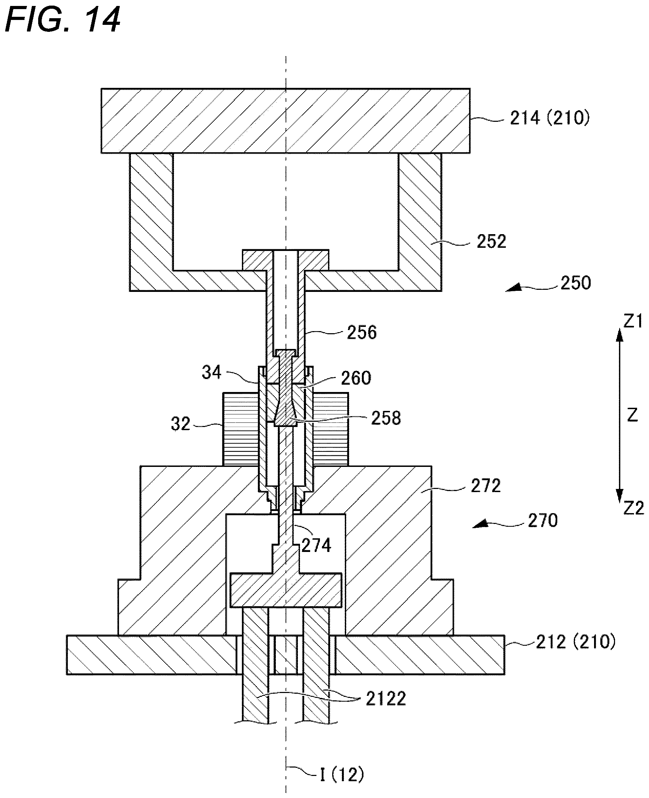

In the present embodiment, the integration step (step S506) is repeatedly executed for each molding pressurization region divided in the axial direction for each one of the molding pressurization regions (step S507). For example, when the integration step (step S506) ends for the first top molding pressurization region as illustrated in FIG. 11, the next integration step (step S506) is executed for the second top molding pressurization region. Specifically, as illustrated in FIG. 13, the molding positioning step (step S5061) is executed for the second top molding pressurization region, and then, as illustrated in FIG. 14, the molding pressurization step (step S5062) is executed for the second top molding pressurization region.

In the present embodiment, as described above, the inner peripheral surface of the rotor shaft 34 is divided into a plurality of molding pressurization regions in the axial direction, and the integration step (step S506) is executed for each molding pressurization region. As a result, even when the axial range of a fitting region between the rotor shaft 34 and the rotor core 32 is relatively long, it is possible to appropriately control the fastening allowance over the axial range of the fitting region to control a desired fastening allowance.

Meanwhile, even with the same internal pressure, the amount of deformation of the rotor shaft 34 outward in the radial direction can vary depending on the axial position of the rotor shaft 34. This is because the rigidity of the rotor shaft 34 at each position in the axial direction can be different due to a difference in the sectional shape of the rotor shaft 34. For example, under the condition of the same internal pressure, the amount of the radially outward deformation of the rotor shaft 34 tends to be larger on a central side in the axial range of the fitting region between the rotor shaft 34 and the rotor core 32 than on an end on the second step portion 347 side in the axial range. Therefore, when the same internal pressure is applied over the entire axial range of the fitting region, it is difficult to make the fastening allowance uniform over the axial range of the fitting region.

In this regard, in the present embodiment, the inner peripheral surface of the rotor shaft 34 is divided into a plurality of molding pressurization regions in the axial direction, and the integration step (step S506) is executed for each molding pressurization region, so that the force F3 (see FIG. 12A) applied from the cam driver 258 to the cam punch 260 via the driver drive pin 274 can be changed for each molding pressurization region. Accordingly, the radial component F2 (see FIG. 12A) applied to the molding pressurization region via the cam punch 260 can be changed for each molding pressurization region. Therefore, in the present embodiment, it is possible to accurately control (adjust) the fastening allowance over the axial range of the fitting region. As a result, in the present embodiment, the fastening allowance can be made uniform over the entire axial range of the fitting region for each molding pressurization region. On the other hand, in the present embodiment, if necessary, the fastening allowance can be made larger in a part of the axial range of the fitting region than in the other parts.

In the present embodiment, since the integration step (step S506) is executed for each molding pressurization region, the actuated position above the cam driver 258 (and the actuated position on the radially outer side of the cam punch 260 accordingly) can be changed for each molding pressurization region. For example, the actuated position above the cam driver 258 for one molding pressurization region may be set above the actuated position above the cam driver 258 for another molding pressurization region. In this case, since the actuated position on the radially outer side of the cam punch 260 for one molding pressurization region is located on the radially outer side of the actuated position on the radially outer side of the cam punch 260 for another molding pressurization region, the fastening allowance can be increased by that difference.

In the present embodiment, the plurality of molding pressurization regions in which the integration step (step S506) is individually executed as described above may be set so as to overlap each other in the axial direction. For example, a part of an axially upper side of the first top molding pressurization region may overlap a part of the axially upper side of the first top molding pressurization region. The plurality of molding pressurization regions are set so as to fully cover a partial range in the axial direction on the inner peripheral surface of the rotor shaft 34, the partial range corresponding to the fitting region between the rotor shaft 34 and the rotor core 32 (that is, a range overlapping the rotor core 32 when viewed in the radial direction), but may be set to a range beyond the partial range. For example, in the example shown in FIGS. 11 and 12A, only a part of the lower side of the first top molding pressurization region when viewed in the radial direction overlaps the fitting region between the rotor shaft 34 and the rotor core 32. However, an upper boundary of the first top molding pressurization region may coincide with the fitting region between the rotor shaft 34 and the rotor core 32.

Meanwhile, a technique is known in which a member including urethane is introduced into the hollow portion 34A of the rotor shaft 34, and the member including urethane is expanded to increase the diameter of the rotor shaft 34, and thus a fastening allowance between the rotor shaft 34 and the rotor core 32 is secured. In such a technique, abrasion of the member including urethane (and life reduction accordingly) tends to be a problem.

In this regard, in the present embodiment, since the cam punch 260 can be constituted by a material (for example, a metal material) having high abrasion resistance unlike urethane, it is possible to avoid a problem that can occur when a member including urethane is used.

In addition, there is known a technique (hydroforming) of ensuring a fastening allowance between the rotor shaft 34 and the rotor core 32 by introducing a high-pressure fluid into the hollow portion 34A of the rotor shaft 34 and increasing the diameter of the rotor shaft 34. In such a technique, there is a problem that a seal structure for sealing the high-pressure fluid in the hollow portion 34A of the rotor shaft 34 becomes complicated.

In this regard, in the present embodiment, since the fastening allowance between the rotor shaft 34 and the rotor core 32 can be secured without using a high-pressure fluid, it is possible to avoid a problem (for example, complication of the seal structure) that may occur when the high-pressure fluid is used.

In FIG. 6 again, when the integration step (step S506) ends, the present manufacturing method includes a step (step S508) of ascending the upper mold 250 to a top dead center.

Next, the present manufacturing method includes an ejection hole forming step (step S509) of forming holes corresponding to the oil holes 348 and 349 in the rotor shaft 34. The ejection hole forming step may be implemented by machining or the like after the rotor shaft 34 is taken out from the manufacturing device 200. When the ejection hole forming step (step S509) ends, the final rotor shaft 34 is completed.

Next, the present manufacturing method includes another finishing step (step S510). Anther finishing step may include a step of fixing the permanent magnet 321, a step of magnetizing, a step of adjusting a rotation balance by the end plates 35A and 35B, and the like.

In this manner, in the present manufacturing method, the rotor core 32 and the rotor shaft 34 can be integrated by the manufacturing device 200 including the mold 240 fixed to the press machine 210. In the present manufacturing method, it is possible to ensure a desired fastening allowance over the entire axial range of the fitting region between the rotor shaft 34 and the rotor core 32.

Next, various modifications to the embodiment described above will be described with reference to FIG. 15 and subsequent drawings.

FIG. 15 is an explanatory diagram of a modification of the cam punch 260 according to the embodiment, and is a diagram illustrating only an outer shape of a cam punch 260A according to the present modification in top view.

The cam punch 260A according to the present modification is divided into eight in the circumferential direction, and each divided body forms a cam slider 2602A.

Since the number of divisions of the cam punch 260A in the circumferential direction is larger than that of the cam punch 260 according to the embodiment, a circumferential range served by one cam slider 2602A in the molding pressurization region is narrowed by the increased number. Therefore, as the number of divisions in the circumferential direction increases, the fastening allowance between the rotor shaft 34 and the rotor core 32 is more likely to be made uniform over the entire circumferential range of the molding target region. However, the larger the number of divisions in the circumferential direction, the more disadvantageous in terms of strength, and the number of divisions may be adapted in consideration of such a contradiction.

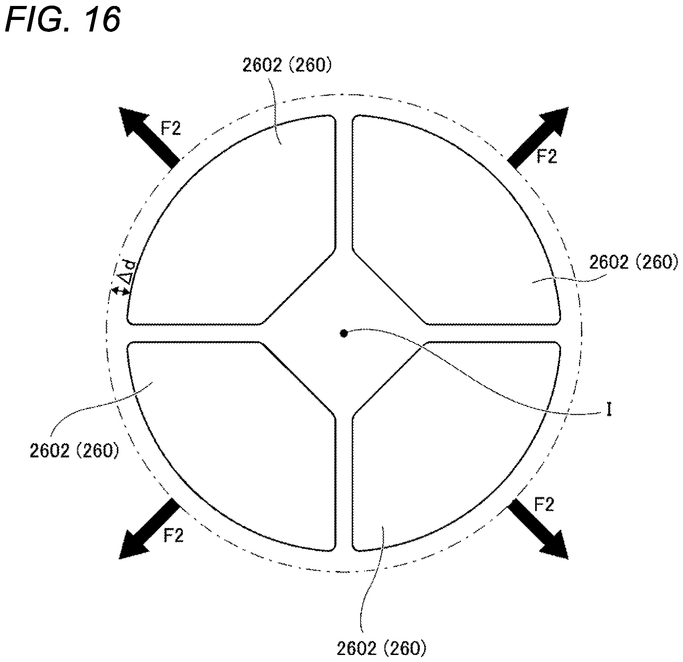

Alternatively, the cam punch 260 according to the embodiment may be rotatable about the reference axis I. In this case, as illustrated in FIGS. 12B and 16, by executing the integration step (step S506) while rotating the cam punch 260 about the reference axis I for the same molding pressurization region, similar effects to the effects of the modification illustrated in FIG. 15 can be obtained. That is, the fastening allowance between the rotor shaft 34 and the rotor core 32 can be made uniform over the entire circumferential range of the molding target region.

In this case, the cam punch 260 may be configured to be rotatable about the reference axis I by the cam punch base 256 being configured to be rotatable about the reference axis I. The cam punch base 256 may be rotatably supported by the upper mold fixing portion 252 via a rotary table such as an index table, for example.

The configuration in which the cam punch 260 is rotatable about the reference axis I and the integration step (step S506) is executed while the cam punch 260 is rotated about the reference axis I for the same molding pressurization region is suitable when the form (form in top view) of the inner peripheral surface of the rotor shaft 34 is circular.

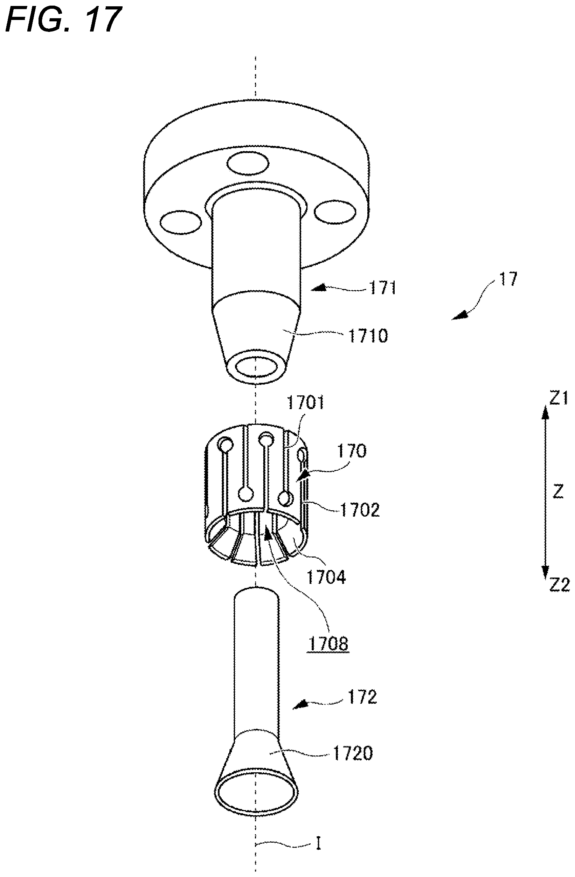

FIG. 17 is a perspective view for describing a pressure molding mechanism 17 that can be substituted for the cam punch 260 and the like according to the embodiment.

The pressure molding mechanism 17 according to the present modification is a mechanism using a collet punch, and includes a collet 170, a first drive member 171, and a second drive member 172 as actuation members.

The collet 170 is an actuation member having a similar function instead of the cam punch 260 according to the embodiment, and is elastically deformable in the radial direction. The collet 170 has a cylindrical shape forming a cavity 1708 on an inner peripheral side. The collet 170 may have cuts 1701 and 1702 along the up-down direction alternately at equal intervals in the circumferential direction so as to facilitate elastic deformation in the radial direction. In this case, the cut 1701 extends from an upper end to a middle of a lower side, and the cut 1702 extends from a lower end to a middle of an upper side.

The collet 170 has a tapered surface 1704 on a lower end of the inner peripheral surface and a tapered surface (not visible in FIG. 17) on an upper end of the inner peripheral surface. The tapered surface 1704 on the lower end is formed over the entire circumferential direction while being inclined with respect to the reference axis I. The tapered surface 1704 is formed to be thinner toward the upper side (to be smaller in inner diameter with a circular cross section). The tapered surface on the upper end may be vertically symmetrical with the tapered surface 1704.

The first drive member 171 may be fixed to the upper mold fixing portion 252 instead of the cam punch base 256 according to the embodiment. The first drive member 171 extends in the up-down direction about the reference axis I and has a tapered surface (inclined surface) 1710 on the lower end. In the first drive member 171, the tapered surface 1710 contacts an upper tapered surface (not visible in FIG. 17) which is a contacted portion of the collet 170 in the cavity 1708 of the collet 170. At this time, the tapered surface 1710 is in surface contact with an upper tapered surface (not visible in FIG. 17) of the collet 170.

The second drive member 172 may be movable in the up-down direction so as to be integrated with the bed knockout pin 2122 instead of the driver drive pin 274 according to the embodiment. The second drive member 172 extends in the up-down direction about the reference axis I and has a tapered surface (inclined surface) 1720 on the lower end. In the second drive member 172, the tapered surface 1720 contacts the lower tapered surface 1704 which is a contacted portion of the collet 170 in the cavity 1708 of the collet 170. At this time, the tapered surface 1720 is in surface contact with the lower tapered surface 1704 of the collet 170. The second drive member 172 may support the collet 170 during the molding pressurization step. In this case, the outer diameter of the tapered surface 1720 may be set larger than the outer diameter at the maximum possible deformation of the collet 170.

By the pressure molding mechanism 17 according to the present modification, the molding pressurization step by the cam punch 260 and the like of the embodiment can be also similarly implemented. That is, when the first drive member 171 is descended, the tapered surface 1710 of the first drive member 171 contacts the upper tapered surface (not visible in FIG. 17) of the collet 170 in the cavity 1708 of the collet 170. Then, when the first drive member 171 is further descended to the actuated position in a state where the collet 170 radially faces the molding pressurization region on the inner peripheral surface of the rotor shaft 34, the upper side of the collet 170 is deformed radially outward to the actuated position on the radially outer side, and the rotor shaft 34 expands in diameter with plastic deformation. Similarly, in the second drive member 172, the tapered surface 1720 contacts the lower tapered surface 1704 of the collet 170 in the cavity 1708 of the collet 170. Then, when the second drive member 172 is further ascended to the actuated position in a state where the collet 170 radially faces the molding pressurization region on the inner peripheral surface of the rotor shaft 34, the lower side of the collet 170 is deformed radially outward to the actuated position on the radially outer side, and the rotor shaft 34 expands in diameter with plastic deformation.

In the case of the pressure molding mechanism 17 according to the present modification, the integration step (see step S506 in FIG. 6) may be repeatedly executed for each molding pressurization region divided in the axial direction for each one of the molding pressurization regions. As a result, even when the axial range of a fitting region between the rotor shaft 34 and the rotor core 32 is relatively long, it is possible to appropriately control the fastening allowance over the axial range of the fitting region to control a desired fastening allowance.

Although each embodiment has been described in detail above, the present disclosure is not limited to a specific embodiment, and various modifications and changes can be made within the scope described in the claims. In addition, all or a plurality of the components of the embodiments can be combined. Among the effects of each embodiment, the effect according to the dependent term is an additional effect distinguished from the superordinate concept (independent term).

For example, in the embodiments described above, the cam punch 260 and the like are positioned for each molding pressurization region of a workpiece by ascending and descending the upper mold 250 and the like in a state where the workpiece is fixed in the integration step (see step S506 in FIG. 6), but the workpiece side may be moved. In the embodiments, the load in the axial direction for expanding the diameter of the rotor shaft 34 is applied by using the bed knockout pin 2122, but a similar load in the axial direction may be applied from the upper mold 250 side.

In the embodiments, the integration step (see step S506 in FIG. 6) is executed once for each one of the molding pressurization regions, but may be executed twice or more for some or all of the molding pressurization regions.

### REFERENCE SIGNS LIST

1: Motor (rotary electric machine), 30: Rotor, 32: Rotor core, 34: Rotor shaft, 200 Manufacturing device, 210: Press machine, 214: Slide, 212: Bolster, 2122: Bed knockout pin (load application portion), 25: Pressure molding mechanism (cam mechanism), 250: Upper mold, 252: Upper mold fixing portion (positioning means), 256: Cam punch base (positioning means, base member), 258: Cam driver (drive member), 25842: Second inclined surface, 260: Cam punch (actuation member), 262: Cavity, 2602, 2602A: Cam slider (divided body), 2601: First inclined surface (contacted portion), 270: Lower mold, 272: Workpiece support (lower mold fixing portion), 170: Collet (actuation member), 1704: Tapered surface (first inclined surface), 1708: Cavity, 171: First drive member (drive member), 1710: Tapered surface (second inclined surface), 172: Second drive member (drive member), 1720: Tapered surface (second inclined surface), P: Region (molding pressurization region), and I: Reference axis (axis)

## Claims

1. A method for manufacturing a rotor for a rotary electric machine, the method comprising:
an arrangement step of supporting a workpiece including a rotor core and a rotor shaft that is hollow and forming a state in which the rotor shaft is disposed on an inner diameter side of the rotor core;
a positioning step of positioning, for the rotor shaft, an actuation member that is positionable in a hollow interior of the rotor shaft, has a cavity on a radially inner side, and is radially displaceable or deformable, such that the actuation member radially faces or contacts a molding pressurization region a on an inner peripheral surface of the rotor shaft; and
a load application step of applying a force in a radial direction to the actuation member while bringing the drive member into contact with a contacted portion of the actuation member in the cavity of the actuation member by applying a force in an axial direction to the drive member after the arrangement step and the positioning step.

2. The method according to claim 1, wherein the positioning step is executed a plurality of times on one of the workpieces such that the actuation member radially faces or contacts each of a plurality of the molding pressurization regions in the axial direction on the inner peripheral surface of the rotor shaft.

3. The method according to claim 2, wherein the load application step is executed for one of the workpieces in each of the positioning steps, and the force having a different magnitude is applied to the drive member when the load application step is executed corresponding to one of the positioning steps and when the load application step is executed corresponding to another one of the positioning steps.

4. A device for manufacturing a rotor for a rotary electric machine, the device comprising:
a workpiece support that supports a workpiece including a rotor core and a rotor shaft that is hollow and forms a state in which the rotor shaft is disposed on an inner diameter side of the rotor core;
an actuation member that is positionable in a hollow interior of the rotor shaft, has a cavity on a radially inner side, and is radially displaceable or deformable;
a drive member that contacts a contacted portion of the actuation member in the cavity of the actuation member;
positioning means that positions the actuation member for the rotor shaft such that the actuation member radially faces or contacts a molding pressurization region on an inner peripheral surface of the rotor shaft; and
load application portion that applies a force in a radial direction to the actuation member while bringing the drive member into contact with the contacted portion by applying a force in an axial direction to the drive member located in the cavity of the actuation member positioned by the positioning means.

5. The device according to claim 4, wherein the contacted portion faces the molding pressurization region in the radial direction.

6. The device according to claim 4 or 5, wherein
the positioning means includes a base member that is movable up and down with respect to the workpiece,
the actuation member has a first inclined surface that is slidable in the radial direction with respect to the base member and is inclined with respect to the axial direction on the contacted portion, and
the drive member has a second inclined surface in surface contact with the first inclined surface.

7. The device according to claim 6, wherein the actuation member is divided in a circumferential direction, and each divided body forms the first inclined surface.

8. The device according to claim 7, wherein the base member is rotatable about an axis with respect to the workpiece.

9. The device according to any one of claims 4 to 8, wherein the positioning means positions the actuation member for the rotor shaft such that the actuation member radially faces or contacts each of a plurality of the molding pressurization regions on the inner peripheral surface of the rotor shaft.

10. The device according to any one of claims 4 to 9, wherein the load application portion applies, to the drive member, the force of a different magnitude between when the actuation member radially faces or contacts a first molding pressurization region of the plurality of molding pressurization regions and when the actuation member radially faces or contacts a second molding pressurization region different from the first molding pressurization region.

11. The device according to any one of claims 4 to 10, wherein the actuation member and the drive member form a cam mechanism and include a metal material.

12. The device according to any one of claims 4 to 11, further comprising:
a press machine including a slide and a bolster that is ascendable and descendable in an up-down direction;
an upper mold including an upper mold fixing portion fixed to the slide; and
a lower mold including the workpiece support fixed to the bolster and facing the upper mold in the up-down direction, wherein
the positioning means includes the upper mold fixing portion,
the actuation member is supported by the upper mold fixing portion,
the drive member is supported by the upper mold fixing portion, and
the load application portion includes a bed knockout pin provided in the bolster.
